# EUROPEAN PATENT APPLICATION

(11) **EP 4 273 827 A1**
(43) Date of publication of application: **08.11.2023**
(21) Application number: 23169433.2
(22) Date of filing: 24.04.2023
(51) Int. Cl.: G08B 25/00, G08B 25/06

(54) **EVENT DEVICE SYSTEM OPERATION USING POWER LINES COMMUNICATION**

(30) Priority: 04.05.2022 US 202217736540
(71) Applicant: Honeywell International Inc., Charlotte, NC 28202 (US)
(72) Inventor: DOLL, David C., Charlotte, 28202 (US); WRIGHT, Patrick, Charlotte, 28202 (US); SELEPA, Robert J., Charlotte, 28202 (US); KURTZ, Edward J., Charlotte, 28202 (US); BOHANON, Mark, Charlotte, 28202 (US)
(74) Representative: Haseltine Lake Kempner LLP

(57) **Abstract**

Devices, systems, and methods for event device system operation are described herein. In some examples, one or more embodiments include a controller comprising a memory and a processor to execute instructions stored in the memory to transmit, to a plurality of event devices via a power line communications (PLC) protocol, a synchronization message according to a predetermined schedule to cause the plurality of event devices to synchronize timing of the plurality of event devices with the controller, transmit, to the plurality of event devices via the PLC protocol, a command according to the predetermined schedule, and receive, from the plurality of event devices via the PLC protocol, a response to the command according to the predetermined schedule.

## Description

### Technical Field

The present disclosure relates to devices, systems, and methods for event device system operation.

### Background

Facilities, such as commercial facilities, office buildings, hospitals, campuses (e.g., including buildings and outdoor spaces), and the like, may have an alarm system that can be triggered during an event, such as an emergency situation (e.g., a fire) to warn occupants to evacuate. Such an alarm system may include a control panel and a number of event devices (e.g., sensors, flashers, sounders, pull stations, etc.) located throughout the facility (e.g., on different floors and/or in different rooms of the facility) that can perform an action when an emergency event is occurring in the facility and provide a notification of the emergency event to the occupants of the facility via visible means, audible means, or other mechanisms.

### Brief Description of the Drawings

Figure 1 is an example of a system for event device system operation, in accordance with one or more embodiments of the present disclosure.
Figure 2 is an example of a timing diagram for event device system operation, in accordance with one or more embodiments of the present disclosure.
Figure 3 is an example of a synchronization process between a controller and an event device for event device system operation, in accordance with one or more embodiments of the present disclosure.
Figure 4 is an example of a controller and an event device for event device system operation, in accordance with one or more embodiments of the present disclosure.

### Detailed Description

Devices, systems, and methods for event device system operation are described herein. In some examples, one or more embodiments include a controller comprising a memory and a processor to execute instructions stored in the memory to transmit, to a plurality of event devices via a power line communications (PLC) protocol, a synchronization message according to a predetermined schedule to cause the plurality of event devices to synchronize timing of the plurality of event devices with the controller, transmit, to the plurality of event devices via the PLC protocol, a command according to the predetermined schedule, and receive, from the plurality of event devices via the PLC protocol, a response to the command according to the predetermined schedule.

Existing facilities can include existing alarm systems. Such alarm systems can include existing event devices such as horn and/or flasher devices. Such horn and/or flasher devices can output audible and/or visible indications, respectively, that an emergency event is occurring. For example, a horn may audibly emit a constant or periodic sound (but not audible voice commands) to indicate that an emergency event is occurring. As another example, a flasher may emit a visible light at periodic intervals to indicate that an emergency event is occurring. Such indicators can inform occupants of the facility that an emergency event is occurring and that they should evacuate the facility.

While the horn may audibly emit sound indications that an emergency event is occurring, the horn does not have the capability to emit audible voice commands. Emission of audible voice commands can allow for pre-recorded or custom voice messages to be emitted to occupants of the facility during an emergency event. For example, such audible voice commands can provide additional information (e.g., directions) for occupants of the facility during an emergency event, such as to direct occupants to certain areas for evacuation of the facility during an emergency event. For instance, audible voice commands can direct occupants to a west stairwell for evacuation because an east stairwell might be filled with smoke. Accordingly, upgrading existing alarm systems to include event devices that can emit audible voice commands can be important to maintain safety in the facility in the event of an emergency event occurring. Additionally, in some examples, jurisdictional regulations may dictate that an alarm system is required to include event devices that can emit audible voice commands in the facility.

Existing alarm systems include a two-wire connection between a controller and horn/flasher device. The two-wire connection allows for power to be provided to the horn and/or flasher device when an emergency event occurs. However, upgrading from the traditional horn and/or flasher device typically requires an additional pair of wires to be run in the facility (e.g., a four-wire connection). The additional pair of wires is utilized to transmit voice data to the event device while the original pair of wires is utilized for power.

Adding an additional pair of wires throughout the facility can be a challenging task. For example, the construction of the facility itself (e.g., cinder block construction) may not allow for easy installation of the additional pair of wires, as there are little to no spaces through which to run the additional pair of wires. Further, certain facilities (e.g., schools) may have limited scheduling availability to install the additional pair of wires (e.g., as such installation must take place when school is not in session, such as during summer months). As such, installation of the additional pair of wires can be a time consuming and costly process. Accordingly, if allowed a choice, many facilities may choose not to upgrade such horn and/or flasher devices due to high cost of labor and time commitments for installation.

Event device system operation, according to the present disclosure, can allow for installation of event devices that support audible voice commands utilizing the existing two-wire connection in a facility. A particular communication protocol along with a predetermined transmission schedule can allow for audio to be transmitted to audible voice command capable event devices from a controller over the existing two-wire connection while allowing the event devices to enter a low-power state when not in communication with the controller, allowing for lower power consumption by the event devices as compared with previous approaches. As such, event devices can be upgraded without having to install additional wiring, providing for a lower cost and faster installation of event devices with audible voice command capabilities in facilities, as compared with previous approaches.

In the following detailed description, reference is made to the accompanying drawings that form a part hereof. The drawings show by way of illustration how one or more embodiments of the disclosure may be practiced.

These embodiments are described in sufficient detail to enable those of ordinary skill in the art to practice one or more embodiments of this disclosure. It is to be understood that other embodiments may be utilized and that process, electrical, and/or structural changes may be made without departing from the scope of the present disclosure.

As will be appreciated, elements shown in the various embodiments herein can be added, exchanged, combined, and/or eliminated so as to provide a number of additional embodiments of the present disclosure. The proportion and the relative scale of the elements provided in the figures are intended to illustrate the embodiments of the present disclosure and should not be taken in a limiting sense.

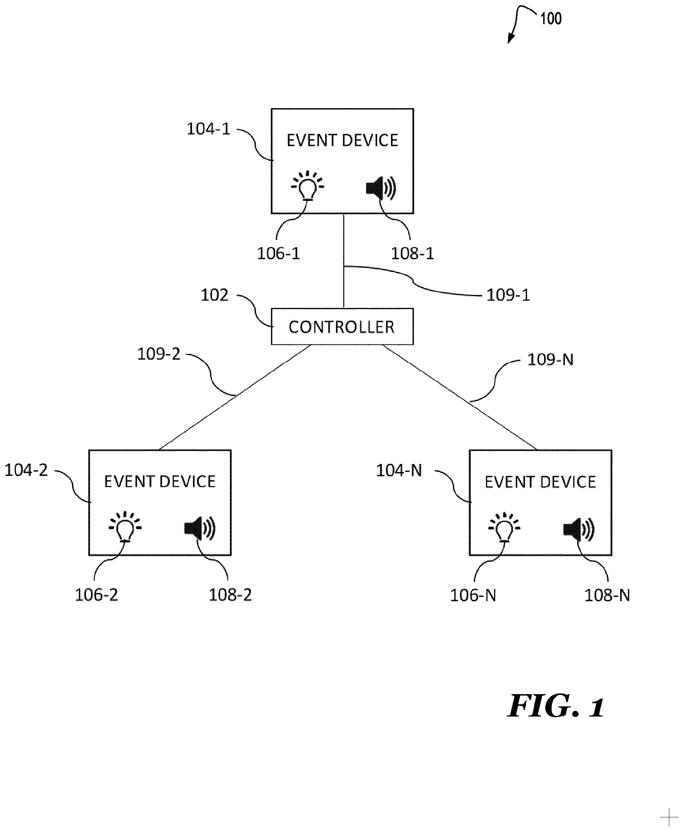

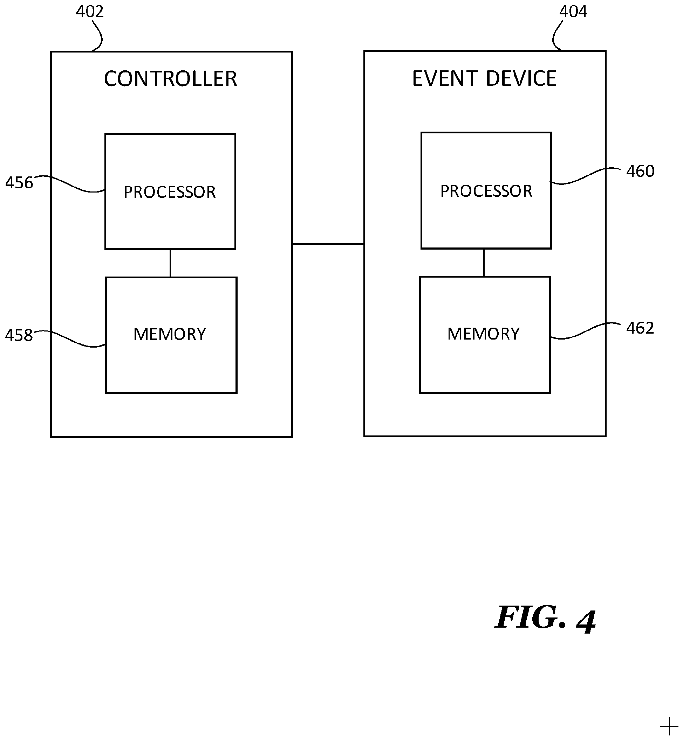

The figures herein follow a numbering convention in which the first digit or digits correspond to the drawing figure number and the remaining digits identify an element or component in the drawing. Similar elements or components between different figures may be identified by the use of similar digits. For example, 102 may reference element "02" in Figure 1, and a similar element may be referenced as 402 in Figure 4.

As used herein, "a", "an", or "a number of" something can refer to one or more such things, while "a plurality of" something can refer to more than one such things. For example, "a number of components" can refer to one or more components, while "a plurality of components" can refer to more than one component.

Figure 1 is an example of a system 100 for event device system operation, in accordance with one or more embodiments of the present disclosure. The system 100 can include a controller 102 and event devices 104-1, 104-2, 104-N.

As mentioned above, a facility can be a space such as a building, a campus (e.g., building(s) with outdoor spaces), etc. and can be designed to include an alarm system. As illustrated in Figure 1, the system 100 can include a portion of the alarm system of the facility. For example, the system 100 can include a controller 102 and a plurality of event devices 104-1, 104-2, 104-N. An event device 104 can be utilized as part of the alarm system to alert occupants of the facility to an emergency situation and can include fire sensors, smoke detectors, heat detectors, carbon monoxide (CO) detectors, or combinations of these; interfaces; manual call points (MCPs); pull stations; input/output modules; aspirating units; and/or audio/visual devices (e.g., speakers, sounders, flashers, buzzers, microphones, cameras, video displays, video screens, etc.), relay output modules, among other types of event devices 104.

For example, as illustrated in Figure 1, the event devices 104-1, 104-2, 104-N can include audio output devices 108-1, 108-2, 108-N, respectively. As used herein, the term "audio output device" refers to an electrical device that converts electromagnetic waves into sound waves. The audio output devices 108 can be, for instance, speakers that can emit audible noise. The audible noise can include audible voice commands. For instance, the audio output devices 108 can receive audio information (e.g., from controller 102) and broadcast the audio information as audible voice commands, as is further described herein. Such emission of audible voice commands can be utilized to indicate to occupants of the facility that an emergency event is occurring and that they should evacuate the facility, as is further described herein. Further, in some examples, the audio output devices 108 can audibly emit a constant or periodic sound in addition to the audible voice commands to indicate to occupants of the facility that an emergency event is occurring.

In some examples, the event devices 104-1, 104-2, 104-N can additionally include flashers 106-1, 106-2, 106-N. Such flashers 106 can output visual indications, respectively, that an emergency event is occurring.

The controller 102 can be connected to each of the event devices 104 via a two-wire connection 109. For example, controller 102 can be connected to event device 104-1 via two-wire connection 109-1, event device 104-2 via two-wire connection 109-2, and event device 104-N via two-wire connection 109-N. The two-wire connections 109 between the controller 102 and event devices 104 can allow for communication between the controller 102 and the event devices 104, as is further described herein.

As illustrated in Figure 1, the controller 102 and the event devices 104 are configured in a single-hop network configuration. As used herein, the term "single-hop" refers to a network configuration in which each node of the cluster is one hop away from the cluster-head. For example, as illustrated in Figure 1, the cluster-head can be the controller 102, and each node of the cluster can be an event device 104 such that any packet transmitted from the cluster-head (e.g., from the controller 102) travels directly to a cluster node (e.g., to an event device 104-1) without traveling through any other intervening cluster nodes (e.g., without traveling through event device 104-2 or event device 104-N). Utilizing a single-hop network configuration can allow for easier synchronization of event devices 104 with the controller 102, as is further described herein.

As mentioned above, the controller 102 can be connected to each event device 104 via a two-wire connection 109 single-hop network configuration. However, in order to facilitate communication between the controller 102 and the event devices 104 via such a two-wire connection 109 and single-hop network configuration, the controller 102 and the event devices 104 have to be synchronized and utilize a predetermined transmission schedule, as is further described herein.

The controller 102 can transmit, to event devices 104, information via a communications protocol. As used herein, the term "communications protocol" refers to a defined set of rules, syntax, semantics, and synchronization for communication between two entities. For example, the controller 102 can transmit information to event devices 104 according to a power line communications (PLC) protocol. As used herein, the term "PLC protocol" refers to a communications protocol that allows for communication of data on a conductor that is simultaneously used for providing power. The PLC protocol can be a G3-PLC protocol. Utilizing the G3-PLC protocol can allow for proper bandwidth to perform voice over wire communication (e.g., transmit audio information to event devices 104 from controller 102) with particular audio codecs (e.g., OPUS encoding) while also providing power to event devices 104. For example, the controller 102 can transmit information to and/or receive information from an event device 104 via the two-wire connection 109 while power is also provided to the event device 104 via the two-wire connection 109 using the G3-PLC protocol. The information transmitted and/or received can be in the form of packets.

Accordingly, the controller 102 can communicate with event devices 104 via the two-wire connections 109 using the G3-PLC protocol. However, the G3-PLC protocol was developed for utilization over a meshed network configuration. Accordingly, a particular predetermined transmission schedule has to be utilized with the G3-PLC protocol, as is further described herein.

As mentioned above, the controller 102 can communicate with event devices 104 via the two-wire connections 109 using the G3-PLC protocol. Such communication can be accomplished according to a predetermined schedule. The predetermined schedule can be, for example, a time-division multiplexing (TDM) schedule. As used herein, the term "TDM" refers to a method of transmitting and receiving independent signals over a common signal path by means of synchronized switching at each end of the transmission line so that each signal appears on the line only a fraction of time in an alternating pattern. For example, the TDM schedule can define various time slots for transmission and reception of information by the controller 102 and transmission and reception of information by the event devices 104.

Such time slots can be time slots defined for transmission of messages and time slots defined for reception of messages. For example, TDM schedule for the event devices 104 can include time slots for receiving synchronization messages, time slots for receiving command messages, time slots for transmitting responses to the command messages, time slots for receiving audio data, etc. Additionally, the TDM schedule for the controller 102 can include time slots for transmitting synchronization messages, time slots for transmitting command messages, time slots for receiving responses to the command messages, time slots for transmitting audio data, etc.

The controller 102 can generate the TDM schedule. For example, the controller 102 can define an amount of time slots, a length of each time slot, which slots are used for device communication, which slots are used for synchronization, etc. The controller 102 can transmit the TDM schedule to the event devices 104, and each of the event devices 104 can include the TDM schedule in memory locally at the event devices 104.

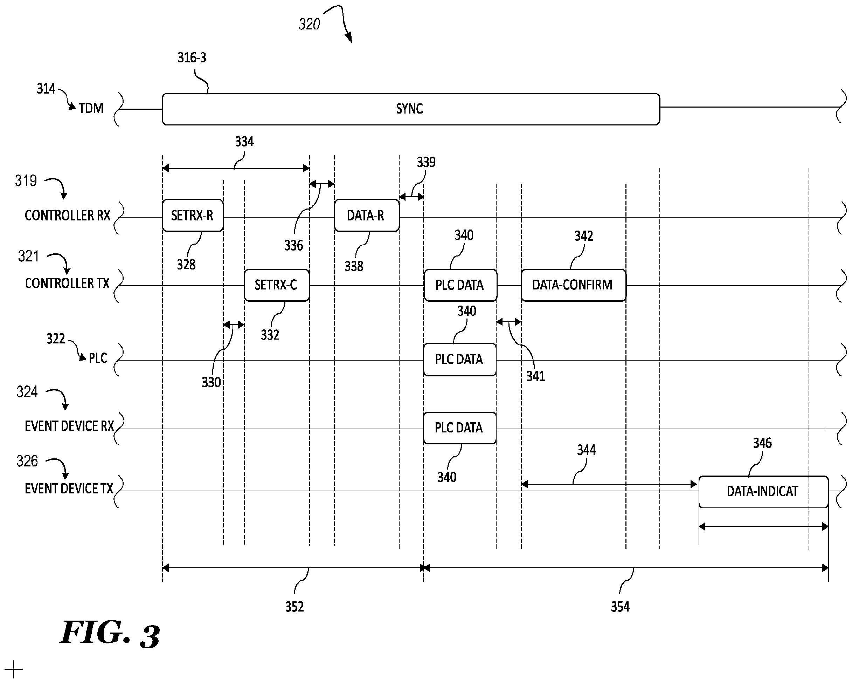

The controller 102 can transmit, to the event devices 104 via the G3-PLC protocol, a synchronization message according to the TDM schedule. The synchronization message can be a message (e.g., information included in packets) that, when received by the event devices 104, cause the event devices 104 to synchronize timing of their clock sources with a clock of the controller. As used herein, the term "clock source" refers to a device that generates a clock signal that oscillates between a high and a low state to coordinate actions of digital circuits. Ensuring the clock sources of the event devices 104 are in sync with the clock source of the controller 102 can ensure that the timing of the transmission according to the TDM schedule is in sync between the controller 102 and the event devices 104. Synchronization of the clock sources of the controller 102 and the event devices 104 is further described in connection with Figure 3.

The event devices 104 can be in different power states dictated by the TDM schedule. For example, the event devices 104 can be in a low-power state or an awake state. As used herein, the term "low-power state" refers to a state of a device in which the device receives just enough power to preserve the device's hardware and data context. As used herein, the term "awake state" refers to a state of a device in which the hardware of the device is functional. The event devices 104 can remain in the low-power state until a predetermined time occurs according to the TDM schedule.

When the predetermined time occurs, the event devices 104 can exit the low-power state and begin listening for a message from the controller 102. According to the TDM schedule, the event devices 104 can begin listening for a synchronization message to be received from the controller 102 at a particular time, such as a first time slot (e.g., defined by the TDM schedule). During the first time slot, the event devices 104 can receive the synchronization message from the controller 102 over the two-wire connections 109 via the G3-PLC protocol. Once the event devices 104 have received a synchronization message from the controller 102, the event devices 104 can synchronize a clock source of each event device with the clock of the controller 102, as is further described in connection with Figure 3.

Next, according to the TDM schedule, the controller 102 can transmit a command to the event devices 104 via the G3-PLC protocol in a second time slot (e.g., defined by the TDM schedule). The command can include information to cause the event devices 104 to perform an action. However, in some embodiments, the command can be blank. For example, if there is no emergency event occurring, the command transmitted to the event devices 104 may be blank such that the controller 102 is not requesting the event devices 104 to perform any action.

Accordingly, the event devices 104 can receive the command from the controller 102 in the second time slot according to the predetermined TDM schedule. In the third time slot according to the TDM schedule, the event devices 104 can transmit a response to the command to the controller 102 and the controller 102 can receive the response to the command in the third time slot. In this example, since the command transmitted to the event devices 104 was blank, the response by the event devices 104 may also be blank.

Although the synchronization message and the command message are described above as being transmitted/received during a first time slot, second time slot, and third time slot, embodiments of the present disclosure are not so limited. For example, the synchronization messages and the command messages can be transmitted/received during the same time slot. In other words, a packet transmitted/received between the controller 102 and the event devices 104 can include multiple messages.

Further time slots may be defined and transmission between the controller 102 and the event devices 104 may occur (e.g., synchronization, transmission, reception, etc.) At the end of the "awake" power state of the event devices 104 (e.g., defined by the TDM schedule), the event devices 104 can enter the low-power state to save power.

As another example, when the predetermined time occurs, the event devices 104 can exit the low-power state and begin listening for a message from the controller 102. According to the TDM schedule, the event devices 104 can begin listening for a synchronization message to be received from the controller 102 at a particular time, such as a first time slot (e.g., defined by the TDM schedule). During the first time slot, the event devices 104 can receive the synchronization message from the controller 102 over the two-wire connections 109 via the G3-PLC protocol. Once the event devices 104 have received a synchronization message from the controller 102, the event devices 104 can synchronize a clock source of each event device with the clock of the controller 102.

Next, according to the TDM schedule, the controller 102 can transmit a command to the event devices 104 via the G3-PLC protocol in a second time slot (e.g., defined by the TDM schedule). The command can include a request to each event device of the plurality of event devices 104 to provide status information about each event device.

Accordingly, the event devices 104 can receive the command to provide status information from the controller 102 in the second time slot according to the predetermined TDM schedule. In the third time slot according to the TDM schedule, the event devices 104 can transmit a response to the command to the controller 102 and the controller 102 can receive the response to the command in the third time slot. In this example, the event devices 104 can transmit (e.g., in the third time slot) status information to the controller 102. Status information can include, for instance, whether the event devices 104 are awake, health information (e.g., whether the event devices 104 are functioning correctly), etc. The controller 102 can receive the status information in the third time slot.

Further time slots may be defined and transmission between the controller 102 and the event devices 104 may occur (e.g., synchronization, transmission, reception, etc.) At the end of the "awake" power state of the event devices 104 (e.g., defined by the TDM schedule), the event devices 104 can enter the low-power state to save power.

As a further example, when the predetermined time occurs, the event devices 104 can exit the low-power state and begin listening for a message from the controller 102. According to the TDM schedule, the event devices 104 can begin listening for a synchronization message to be received from the controller 102 at a particular time, such as a first time slot (e.g., defined by the TDM schedule). During the first time slot, the event devices 104 can receive the synchronization message from the controller 102 over the two-wire connections 109 via the G3-PLC protocol. Once the event devices 104 have received a synchronization message from the controller 102, the event devices 104 can synchronize a clock source of each event device with the clock of the controller 102.

Next, according to the TDM schedule, the controller 102 can transmit a command to the event devices 104 via the G3-PLC protocol in a second time slot (e.g., defined by the TDM schedule). The command can include a message to the event devices 104 to transition to an alarm state. For example, the alarm system can determine that an emergency event is occurring in the facility. The message to transition to the alarm state can be transmitted to the event devices 104 in response to the determination that the emergency event is occurring. Additionally, the controller 102 can include with the message to the event devices 104 an alarm state TDM schedule, as is further described herein.

Accordingly, the event devices 104 can receive the command to transition to an alarm state from the controller 102 in the second time slot according to the predetermined TDM schedule. In response to receiving the message to transition to an alarm state, the event devices 104 can utilize the alarm state TDM schedule. The alarm state TDM schedule can allow for receiving audio data, as is further described herein.

When the event devices 104 transition to the alarm state, the event devices 104 are configured to begin to receive, in a third time slot (defined by the alarm state TDM schedule), audio data from the controller 102. The audio data can be, for example, pre-recorded audio data and/or live audio captured by a microphone spoken by a user to direct occupants of the facility to evacuate the facility. The audio data can be transmitted to the event devices 104 from the controller in subsequent time slots to the third time slot. The event devices 104 can broadcast the audio data via the audio output devices 108 accordingly. Additionally, in response to the event devices 104 transitioning to the alarm state, in some examples the event devices 104 can activate the flashers 106.

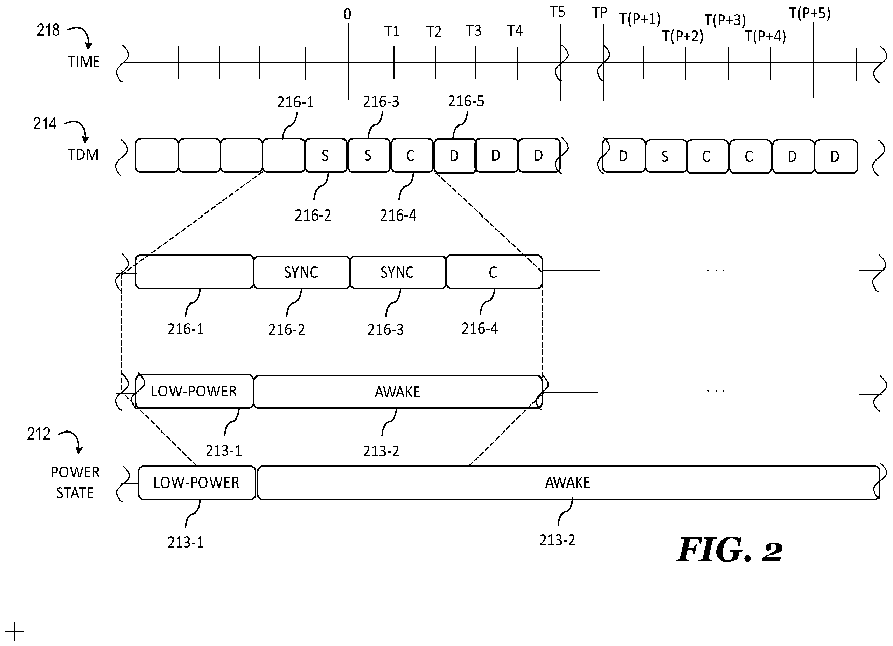

Figure 2 is an example of a timing diagram 210 for event device system operation, in accordance with one or more embodiments of the present disclosure. The timing diagram 210 can include a power state 212, a TDM schedule 214 including time slots 216, and a time axis 218.

As illustrated in Figure 2, the event device can include the timing diagram 210. The event device can be in a low power state 213-1 according to the power state 212 in the timing diagram 210. For example, the event device can be in a low-power state 213-1 for an amount of time. At a predetermined time according to the TDM schedule 214, the event device can enter an awake state 213-2. As the event device transitions from the low-power state 213-1 to the awake state 213-2, the event device can begin listening for a synchronization message in time slot 216-2 (e.g., as indicated in Figure 2 by the letter "S" on the TDM schedule 214). In time slot 216-1, while the TDM schedule 214 has the time slot 216-1 defined, nothing is being transmitted/received at the event device or at the controller, as the event device is in the low-power state 213-1.

The event device can receive the synchronization message in the time slot 216-3 defined by the TDM schedule 214. Each time slot 216 can be defined according to the TDM schedule 214. For example, each time slot 216 can be a defined length in time (as illustrated by the time axis 218). In some examples, each time slot can be 15 milliseconds (ms) (e.g., time period 0 to T1 on the time axis 218 can be 15 ms such that the corresponding time slot 216-3 can be 15 ms). However, embodiments of the present disclosure are not so limited. For example, each time slot can be 20 ms. In some embodiments, the time slots 216 may be defined according to the length of time taken to receive a portion of audio data (e.g., when the alarm system is in an alarm state and the event device is to receive audio data from a controller).

At time slot 216-4, the TDM schedule 214 can cause the event device to receive a command from the controller (e.g., as indicated in Figure 2 by the letter "C" on the TDM schedule 214). The command can be, for example, a blank message (e.g., to cause the event device to take no action), a request to provide status information about the event device, and/or a message to transition to an alarm state, among other commands. As an example, the event device can receive, at time slot 216-4, a command to provide status information about the event device. At time slot 216-5, the event device can transmit the status information about the event device to the controller (e.g., as indicated in Figure 2 by the letter "D" on the TDM schedule 214).

Although not illustrated in Figure 2 for clarity and so as not to obscure embodiments of the present disclosure, the controller can include a similar timing diagram. However, the TDM schedule for transmission/receiving can be opposite of that of the timing diagram 210 for the event device. For example, in time slot 216-3 the controller can transmit the synchronization message to the event device, whereas the event device receives the synchronization message in time slot 216-3, in time slot 216-4 the controller is to transmit the command to the event device whereas the event device receives the command in time slot 216-4, and in time slot 216-5 the controller is to receive a response to the command whereas the event device transmits the response to the command in time slot 216-5, etc.

Additionally, as illustrated in Figure 2, the event device can stay in the awake state 213-2 for a predetermined period of time (e.g., an awake frame). During the awake frame, the event device can include a synchronization time slot every predefined number of time slots to ensure the event device is synchronized in time with the controller. When the awake frame expires, the event device can transition again to the low-power state. The event device can transition between the low-power state and the awake state at a predetermined frequency. For example, the event device can transition from the low-power state to the awake state every two seconds in order to synchronize with the controller as well as listen for (e.g., receive) a command to do nothing, transmit status information, or transition to an alarm state (e.g., if an alarm state is detected by the alarm system).

Figure 3 is an example of a synchronization process 320 between a controller and an event device for event device system operation, in accordance with one or more embodiments of the present disclosure. The synchronization process 320 can be described by a TDM schedule 314, a controller receiver axis 319, a controller transmission axis 321, a PLC axis 322, an event device receiver axis 324, and an event device transmission axis 326.

As illustrated in Figure 3, the synchronization process between the controller and the event device is shown. For example, as previously described in connection with Figure 2, the TDM schedule 314 can include a synchronization message transmitted from the controller to the event device during a time slot 316-3. Determination of the clock offset of the event device and synchronization of the clock of the event device with the controller is further described herein utilizing the synchronization process 320.

The controller can begin a mode switch from receive to transmit. Such a mode switch can occur by a set receive to transmit request 328 being processed by the controller. Time delay 330 can be a latency in a modem included in the controller (e.g., a system-on-chip modem). When the set to transmit confirmation 332 occurs, the controller is in a transmission mode. Such a switch can occur over time 334. Time 336 can be a latency in the controller. The data request 338 for transmission can occur and a short delay 339 can occur between the data request 338 for transmission and transmission of the data 340 over the two-wire connection via the G3-PLC protocol. The data 340 can be a synchronization message transmitted from the controller to the event device. The total latency in transmission of the synchronization message 352 can be the total of the time 334 of the controller to switch from receiver mode to transmission mode, the time 336 of the latency of the controller, the time to make the data request 338, and short delay 339 before transmission of the data 340.

A confirmation delay 341 can occur between the data 340 being transmitted from the controller and received by the event device before confirmation of the data 342 occurs. A delay 344 can occur before the data indication 346 at the event device occurs. The total latency in receiving the synchronization message 354 can be the total of the transmission of the data 340, the confirmation delay 341, the delay 344 before the data indication 346 and the time for the data indication 346.

As such, the event device can determine the total clock offset of the clock of the event device from the clock of the controller based on the latency in transmission of the synchronization message and the latency in receiving the synchronization message. For example, the event device can determine the total clock offset by adding the latency in transmission of the synchronization message and the latency in receiving the synchronization message. Based on the determined clock offset, the event device can adjust the clock source of the event device by the determined clock offset in order to synchronize the clock of the event device with the clock of the controller. Such a synchronization can allow for TDM scheduling of messages between a controller and event devices.

Accordingly, event device system operation according to the present disclosure can allow for use of event devices that support audible voice commands with an existing two-wire connection in a facility by utilizing a single-hop network configuration between a controller and the event devices and G3-PLC communication protocols with TDM scheduling. Further, such an approach can allow for event devices to be in a low-power state when not in communication with the controller, allowing for power savings as compared with previous approaches utilizing mesh network configurations.

Figure 4 is an example of a controller 402 and an event device 404 for event device system operation, in accordance with one or more embodiments of the present disclosure. As illustrated in Figure 4, the controller 402 can include a memory 458 and a processor 456 and the event device can include a memory 462 and a processor 460 for event device system operation in accordance with the present disclosure.

The memory 458, 462 can be any type of storage medium that can be accessed by the processor 456, 460, respectively, to perform various examples of the present disclosure. For example, the memory 458, 462 can be a non-transitory computer readable medium having computer readable instructions (e.g., executable instructions/computer program instructions) stored thereon that are executable by the processors 456, 460, respectively, for event device system operation in accordance with the present disclosure.

The memory 458, 462 can be volatile or nonvolatile memory. The memory 458, 462 can also be removable (e.g., portable) memory, or non-removable (e.g., internal) memory. For example, the memory 458, 462 can be random access memory (RAM) (e.g., dynamic random access memory (DRAM) and/or phase change random access memory (PCRAM)), read-only memory (ROM) (e.g., electrically erasable programmable read-only memory (EEPROM) and/or compact-disc read-only memory (CD-ROM)), flash memory, a laser disc, a digital versatile disc (DVD) or other optical storage, and/or a magnetic medium such as magnetic cassettes, tapes, or disks, among other types of memory.

Further, although memory 458, 462 is illustrated as being located within controller 402 and event device 404, respectively, embodiments of the present disclosure are not so limited. For example, memory 458, 462 can also be located internal to another computing resource (e.g., enabling computer readable instructions to be downloaded over the Internet or another wired or wireless connection).

The processors 456, 460 may be a central processing unit (CPU), a semiconductor-based microprocessor, and/or other hardware devices suitable for retrieval and execution of machine-readable instructions stored in the memory 458, 462, respectively.

Although specific embodiments have been illustrated and described herein, those of ordinary skill in the art will appreciate that any arrangement calculated to achieve the same techniques can be substituted for the specific embodiments shown. This disclosure is intended to cover any and all adaptations or variations of various embodiments of the disclosure.

It is to be understood that the above description has been made in an illustrative fashion, and not a restrictive one. Combination of the above embodiments, and other embodiments not specifically described herein will be apparent to those of skill in the art upon reviewing the above description.

The scope of the various embodiments of the disclosure includes any other applications in which the above structures and methods are used. Therefore, the scope of various embodiments of the disclosure should be determined with reference to the appended claims, along with the full range of equivalents to which such claims are entitled.

In the foregoing Detailed Description, various features are grouped together in example embodiments illustrated in the figures for the purpose of streamlining the disclosure. This method of disclosure is not to be interpreted as reflecting an intention that the embodiments of the disclosure require more features than are expressly recited in each claim.

Rather, as the following claims reflect, inventive subject matter lies in less than all features of a single disclosed embodiment. Thus, the following claims are hereby incorporated into the Detailed Description, with each claim standing on its own as a separate embodiment.

## Claims

1. A controller (102, 402) for operating an event device system (100), comprising:
a memory (458); and
a processor (456) configured to execute executable instructions stored in the memory (458) to:
transmit, to a plurality of event devices (104) via a power line communications (PLC) protocol, a synchronization message according to a predetermined schedule to cause the plurality of event devices (104) to synchronize timing of the plurality of event devices (104) with the controller (102, 402);
transmit, to the plurality of event devices (104) via the PLC protocol, a command according to the predetermined schedule; and
receive, from the plurality of event devices (104) via the PLC protocol, a response to the command according to the predetermined schedule.

2. The controller (102, 402) of claim 1, wherein the PLC protocol is a G3-PLC protocol.

3. The controller (102, 402) of claim 1, wherein the predetermined schedule is a time-division multiplexing (TDM) schedule.

4. The controller (102, 402) of claim 3, wherein the TDM schedule defines at least one of:
a first time slot (216) for the synchronization message;
a second time slot (216) for the command; and
a third time slot (216) for the response.

5. The controller (102, 402) of claim 1, wherein the command is a request to each event device of the plurality of event devices (104) to provide status information about each event device (104).

6. The controller (102, 402) of claim 1, wherein the command is a message to the plurality of event devices (104) to transition to an alarm state.

7. The controller (102, 402) of claim 6, wherein the processor (456) is configured to execute the instructions to transmit the message to transition to the alarm state in response to determining an emergency event is occurring.

8. The controller (102, 402) of claim 1, wherein the processor (456) is configured to execute the instructions to transmit the synchronization message to cause the plurality of event devices (104) to synchronize timing of their clock sources with a clock of the controller (102, 402).

9. The controller (102, 402) of claim 1, wherein the processor (456) is configured to execute the instructions to:
generate the predetermined schedule; and
transmit the predetermined schedule to the plurality of event devices (104).

10. An event device system (100), comprising:
a controller (102, 402) configured to:
transmit, to a plurality of event devices (104) via a G3 power line communications (PLC) protocol, a synchronization message according to a predetermined time-division multiplexing (TDM) schedule;
transmit, to the plurality of event devices (104) via the G3-PLC protocol, a command according to the predetermined TDM schedule; and
receive, from each of the plurality of event devices (104) via the G3-PLC protocol, a response to the command according to the predetermined TDM schedule; and
the plurality of event devices (104), each configured to:
exit a low-power state (213) according to the predetermined TDM schedule included in a memory (462) of each event device;
synchronize, by each event device of the plurality of event devices (104) in response to receiving the synchronization message from the controller (102, 402), a clock source of each event device with a clock of the controller (102, 402);
receive, according to the predetermined TDM schedule, a command from the controller (102, 402);
transmit, according to the predetermined TDM schedule in response to receiving a command from the controller (102, 402), a response to the command to the controller (102, 402); and
enter the low-power state (213) according to the predetermined TDM schedule.

11. The system of claim 10, wherein the controller (102, 402) is connected to each event device (104) of the plurality of event devices (104) via a two-wire connection (109).

12. The system of claim 10, wherein the controller (102, 402) and the plurality of event devices (104) are configured in a single-hop network configuration.

13. The system of claim 10, wherein the controller (102, 402) is configured to transmit the synchronization message and the plurality of event devices (104) are each configured to receive the synchronization message in a first time slot (216) defined by the predetermined TDM schedule.

14. The system of claim 13, wherein the controller (102, 402) is configured to transmit the command and the plurality of event devices (104) are each configured to receive the command in a second time slot (216) defined by the predetermined TDM schedule.

15. The system of claim 14, wherein the plurality of event devices (104) are each configured to transmit the response to the command and the controller (102, 402) is configured to receive the responses to the command in a third time slot (216) defined by the predetermined TDM schedule.
